(19) Europäisches Patentamt / European Patent Office / Office européen des brevets

(11) EP 3 034 871 A1

(12) EUROPEAN PATENT APPLICATION

(43) Date of publication:
22.06.2016 Bulletin 2016/25

(51) Int Cl.:
*F03D 15/00* (2016.01)

(21) Application number: 14198525.9

(22) Date of filing: 17.12.2014

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: Siemens Aktiengesellschaft
80333 München (DE)

(72) Inventor: Couturier, Philippe
2100 Copenhagen (DK)

(54) **Rotor blade with an opening at the tip section**

(57) The invention relates to rotor blade (20) for a wind turbine (10), wherein the rotor blade (20) comprises a shell (31) which defines the outer shape of the rotor blade (20), and a cavity (32) which is encompassed by the shell (31), and a longitudinal axis (26) which extends from the root section (21) of the rotor blade (20) to the tip section (22) of the rotor blade (20). Furthermore, the tip section (22) comprises an opening (40) for emitting air from the cavity (32) to the outside. The opening (40) is configured such that the emitted air (43) flows out in an angle (44) which deviates less than sixty degrees from the longitudinal axis (26) of the rotor blade (20). Thus, a tip vortex, which is typically present at the tip section (22) of the rotor blade (20), is displaced from the tip section (22). Note that the air is not actively, but passively driven out of the cavity (32) into the outside through the opening (40) at the tip section (22) of the rotor blade (20). This mechanism can also be described as a "passive pumping" mechanism.

FIG 4

**Description**

The present invention relates to a rotor blade for a wind turbine. In particular, the invention relates to a rotor blade with improved aerodynamic characteristics. Furthermore, the invention relates to a wind turbine comprising such a rotor blade.

A rotor blade for a wind turbine is a rotor blade which is arranged and prepared for being used in a wind turbine. During operation of the wind turbine, the rotor blade rotates in the air about a rotor axis of rotation.

During rotation of the rotor blade, the air is flowing around the rotor blade. In other words, the airflow which impinges on the rotor blade separates into a first part that is flowing across the upper surface of the rotor blade and a second part which is flowing on the lower surface of the rotor blade. The upper surface of the rotor blade is also referred to as the suction side; the lower surface of the rotor blade is also referred to as the pressure side of the rotor blade.

Typically, the airflow is flowing substantially perpendicular to the longitudinal axis of the rotor blade. In other words, the major part of the air is flowing across the rotor blade and only a minor part of the air is flowing in other directions, for instance along the longitudinal axis of the rotor blade. At the tip section of the rotor blade, typically a considerable airflow from the pressure side to the suction side of the rotor blade exists. This airflow at the tip section causes a so called tip vortex. This tip vortex typically has a negative impact on the local aerodynamic characteristics of the rotor blade, and, thus, the entire aerodynamic performance of the rotor blade may be reduced. Specifically, tip vortices may reduce the lift of the rotor blade.

One common and well-known approach to reduce the negative impact of tip vortices is the provision of winglets at the tip section of rotor blades. This concept is also known, for instance, from aircraft vehicles, such as planes, helicopters or the like. A winglet has the technical effect of displacing the tip vortex further outboard in the rotor plane of the rotor blade. The rotor plane is defined as being the plane that is perpendicular to the rotor axis of rotation.

However, winglets for rotor blades have certain disadvantages. A first disadvantage is that the mass, i. e. the weight, of the rotor blade is increased due to the winglet. Consequently, this increases the loads on the wind turbine, especially on the rotor blade. A second disadvantage relates to the fact that either the rotor blade is manufactured in one single piece including the winglet or the winglet is added to the rotor blade after the rotor blade has been completely finished. In the first case, manufacturing of the rotor blade is more complicated as standard moulds have to be adapted; even standard manufacturing processes may need adaptations. In the second case, the area of connection between the main rotor blade part and the winglet is prone to premature structural failing such as cracks, which, for instance, allow water or dirt to enter the rotor blade's cavity or even lead to a break of the rotor blade.

Thus, there exists the wish to reduce or even prevent the negative impact of tip vortices on the local aerodynamic characteristics of the rotor blade without the disadvantages of conventional winglets as described above.

This problem is solved by the independent claims. Advantageous embodiments and developments are described in the dependant claims.

According to the invention there is provided a rotor blade for a wind turbine, wherein the rotor blade comprises a shell which defines the outer shape of the rotor blade. The rotor blade furthermore comprises a cavity which in encompassed by the shell. Furthermore, the rotor blade comprises a longitudinal axis which extends from the root section of the rotor blade to the tip section of the rotor blade. The tip section comprises an opening for emitting air from the cavity to the outside. The opening is configured such that the emitted air flows out in an angle which deviates less than sixty degrees from the longitudinal axis of the rotor blade, thus a tip vortex being generated at the tip section of the rotor blade is displaced from the tip section.

The rotor blade is suitable for being used in a wind turbine. In particular, the rotor blade is a rotor blade of a wind turbine. The wind turbine is to be understood as a device that converts kinetic energy from the wind into rotational energy of the rotor. Subsequently, this rotational energy is used to generate electricity.

The shell of the rotor blade defines the outer shape of the rotor blade. Significant aerodynamic properties of the rotor blade are determined by the outer shape of the rotor blade. The shell may, for instance, be made by a fiber composite material. The fiber composite material may be reinforced by additional components such as glass fibers, carbon fibers or the like. Another means for reinforcement of the shell is balsa wood. The shell may comprise a first part and a second part, for instance a first half and a second half. Alternatively, the shell may also be made as one single integral part of the rotor blade.

The rotor blade is not solid as this would typically lead to an elevated weight of the rotor blade. The rotor blade rather comprises a cavity which is encompassed by the shell. It is advantageous if most of the volume of the rotor blade is comprised by the hollow space, i.e. the cavity, in the interior of the rotor blade and that the shell only comprises a small part of the rotor blade. Thus, the shell is only made as solid as to provide the stable and robust structure which is necessary to resist the loads experienced by the rotor blade.

The rotor blade comprises a root section which is arranged and prepared for being connected to the hub of the wind turbine. Adjacent to the root section is the transition part of the rotor blade at which the cross sectional shape of the rotor blade changes from a circular shape at the root to an aerodynamic airfoil profile further outboard of the rotor blade. The airfoil profile is designed such that it features a lift producing shape, such as it is known from airplanes, for instance.

A longitudinal axis, which is also referred to as the span of the rotor blade, as well as a chord line can be attributed to the rotor blade. The chord line is a straight and direct line connecting the trailing edge of the rotor blade and the leading edge of the rotor blade. Furthermore, the chord line is substantially perpendicular to the longitudinal axis of the rotor blade. The shoulder of the rotor blade is defined as being the part of the rotor blade where the chord line has its maximum length. The part of the rotor blade extending between the shoulder and the root section is referred to as the transition part. The part of the rotor blade which extends between the shoulder and the tip of the rotor blade is referred to as the airfoil section of the rotor blade. Note that as the rotor blade may have a curvature, i.e. a sweep, likewise the longitudinal axis may be curved instead of being a straight line.

A key aspect of the present invention is the provision of an opening for emitting air from the cavity to the outside. The opening is located at the tip section of the rotor blade. The opening is specifically located and designed such that the air, which is emitted at the opening, flows out of the cavity in an angle which deviates less than sixty degrees from the longitudinal axis of the rotor blade. In other words, the air may be emitted into a cone with a main direction that is substantially parallel to the longitudinal axis of the rotor blade. This has the technical effect that tip vortices, which are present at the tip section of the rotor blade, are displaced away from the tip section. This in turn improves the local aerodynamic characteristics of the rotor blade at the tip section. In particular, this results in an improved lift of the rotor blade.

Note that additionally also the noise that is generated by the operating rotor blade may be reduced due to the displacement of the tip vortices.

It is furthermore noted that the tip vortices may not necessarily be reduced in size or subdivided into several smaller vortices. According to the specific configuration of the opening this might be the case and this might further improve the aerodynamic characteristics of the rotor blade. However, a substantial improvement of the local aerodynamic characteristics of the rotor blade is already achieved by the mere displacement of the tip vortex away from the tip section of the rotor blade.

It is also noted that the underlying principle of preventing the negative impact of the tip vortices might be seen as similar between existing winglets and the proposed openings at the tip section. However, the structural features, i.e. the structural realization of the concept is significantly differing between a conventional rotor blade with a winglet and the rotor blade described herein.

A first advantage of the described rotor blade is that it is easy to manufacture as it does not require a specifically shaped add-on at the rotor blade. Thus, it may be manufactured in one piece without complicating the manufacturing process of the rotor blade.

A second advantage is that the mass of the rotor blade is reduced by omission of the winglet and providing the openings for emitting air instead. This reduced mass of the rotor blade results in a reduction in loads which can be used to increase the annual energy production.

The angle of the emitted air relative to the longitudinal axis of the rotor blade refers to the angle that is present in close vicinity to the opening. In a distance away of the opening the direction of the emitted air may be different due to the airflow outside of the rotor blade and/or due to the speed of the tip section of the rotor blade relative to the outside. Particularly, the emitted air will be deviated towards the trailing edge during rotation of the rotor blade.

In the case of a curved longitudinal axis, advantageously the angle is determined based on the direction of the longitudinal axis at the tip section of the rotor blade. This means that if, for instance, the tip section is curved towards the leading edge or the trailing edge of the rotor blade leading to a curvature of the longitudinal axis, the preferred range of angles for emission of the air refers to the direction of the longitudinal axis at the tip section of the rotor blade.

In other words, if a rotor blade has a longitudinal axis which is e.g. inclined by 15 degrees towards the trailing edge at the tip section, it is preferred to emit the air substantially in parallel to the direction of the longitudinal axis at the tip section, i.e. to emit the air with an angle of 15 degrees inclined to the "main" direction of the longitudinal axis at the root section of the rotor blade, which is similar to an assumed pitch axis of the rotor blade.

Thus, in other words, the longitudinal axis may also be understood as the pitch axis of the rotor blade in case that the rotor blade is able to be pitched about an axis relative to the hub of the rotor blade.

In an embodiment of the invention, the emitted air flows out in an angle which deviates less than forty degrees from the longitudinal axis of the rotor blade.

In other words, it is advantageous that the cone into which the direction of the emitted air may be taken is directed in a more focused way towards the longitudinal axis of the rotor blade. This favors a more efficient displacement of the tip vortex away from the tip section of the rotor blade.

Even more advantageously, the emitted air flows out in an angle which is substantially parallel to the longitudinal axis of the rotor blade. In this context, substantially parallel refers to deviations less than ten degrees, in particular less than five degrees with regard to a perfectly parallel direction towards the longitudinal axis of the rotor blade.

In other words, it seems that the efficiency of the inventive concept is best if the air flows out in substantially the same direction as the longitudinal axis of the rotor blade.

Note that the angle refers to the main direction of the emitted airflow. This does not exclude that there exists a certain scattering or variation of the actual air stream flowing out of the opening. In the case of scattering or variation of the actual air stream flowing out of the opening, the angle refers to an averaged or main direction of the emitted airflow.

The emitted air that flows out of the cavity into the outside is also referred to as a tip jet.

Another key aspect of the present invention is that due to the fact that the rotor blade performs a rotational movement during operation of the wind turbine, a forced vortex is generated. This acts as a passive pump for the tip jets. In other words, the air is not actively, but passively driven out of the cavity into the outside through the openings at the tip section.

Assuming that an atmospheric pressure $P_0$ is present at the root section of the rotor blade, i.e. at R=0, then the pressure at the tip of the rotor blade is calculated by

$$P = P_0 + \frac{\rho \omega^2 r^2}{2},$$

wherein $\rho$ is the density of air, $\omega$ is the angular velocity of the rotor blade and r is the length of the rotor blade.

The velocity of the air through the opening at the tip section of the rotor blade is given by

$$u = \sqrt{\frac{2\Delta P}{\rho}},$$

wherein $\Delta P$ is the pressure drop across the opening. Given the present assumptions, $\Delta P = P-P_0$.

Combining these two equations, it can be calculated that the velocity of the air through the opening at the tip section of the rotor blade is given by

$$u = \omega r.$$

Thus, the velocity of the tip jet with respect to the rotor blade is equal to the velocity of the tip of the rotor blade.

In the following, different possible configurations of the opening at the tip sections are proposed.

In a first embodiment thereof, the opening is shaped as a slit. The slit may also be named a slot or a port. In particular, a slit is characterized that its length is more than ten times larger than its width.

Providing the opening in the shape of a slit has the technical effect of displacing the tip vortex in a controlled and efficient manner along a broad and expanded section in at the tip section of the rotor blade. By the small width of the slit compared to its length a controlled and focused effect of the emitted air is ensured. By having a certain extension, i.e. a certain length, it is ensured that the tip vortex is not only attacked at one specific point but along a line of a certain extension. A further advantage of choosing a slit is that it is relatively easy to manufacture.

It is advantageous to orientate the slit in a substantially chordwise direction of the tip section of the rotor blade. This is due to the fact that the airfoil profile of the rotor blade at the tip section comprises a length, i.e. an extension in chordwise direction, which is typically larger its height, i.e. an extension perpendicular to the chordwise direction. The ratio between these two extensions of the airfoil profile is referred to as the relative thickness of the rotor blade. In particular, the relative thickness of the rotor blade at the tip section is in the range between 10 per cent and 30 per cent. This means that the chordwise extension is three times to ten times larger than its extension perpendicular to it. In order to have a line with a sufficiently large extension it is advantageous to place the slit in substantially chordwise direction. Note that in this context the notion "substantially" includes any deviations up to ten per cent, in particular up to five per cent from the chordwise direction.

Note that a slit may be shaped as a straight line or that it may comprise a curvature. A curved slit or at least having the option of having a curved slit has the advantage of being flexible with regard to the concrete airfoil profile of the tip section where the opening has to be provided.

In a second embodiment of possible configurations of the opening, the opening comprises a plurality of holes. The holes may have an elliptical shape which includes circular shapes but also elliptical shapes. The ellipse has a certain eccentricity. Having an opening comprising a plurality of holes provides for a focused airflow that can be emitted at the tip section of the rotor blade. Furthermore, from a manufacturing point of view, drilling holes into the tip section of the rotor blade might be an option which is relatively easy to implement in existing manufacturing processes.

Note that, in a first alternative, the tip section of the rotor blade may be cut, i.e. the tip section may be delimited by a substantially planar area. In particular, the planar area may be perpendicular to the spanwise direction of the rotor blade.

In a second alternative, the tip section may be pointed and comprises a recess for accommodating the opening for emitting air from the cavity to the outside.

In other words, the pointed tip section comprises a groove, i.e. a portion where a recess is grooved into the tip section. This has the advantage that the opening can be manufactured more easily. It has the further advantage that the air is emitted in a highly focused manner as it is bound by the upper surface and the lower surface of the recess.

It is advantageous to provide the opening along at least a certain extension. It might be difficult to have the opening until explicitly the leading edge or the trailing edge. However, it might be advantageous that the opening extends at least partially into the chordwise region between 0 per cent and 20 per cent as measured from the leading edge of the rotor blade and/or into the chordwise region between 0 per cent and 20 per cent as measured from the trailing edge of the rotor blade.

Thus, a reliable and strong displacement of the tip vortices is ensured.

It is advantageous that the air is emitted at the opening due to a difference in the pressure of the air in the cavity during rotation of the rotor blade about a rotor axis of rotation. This concept is also referred to as a passive pump concept.

The air may enter the cavity of the rotor blade by any further opening such as holes, slots or also a porous membrane at any position at the rotor blade.

However, in an advantageous embodiment the air is sucked in and enters the cavity at the root section of the rotor blade.

In other words, the air is sucked in from the hub of the wind turbine. This has the advantage that further openings in the shell of the rotor blade for sucking in the air are not required. Instead, it is benefitted from a connection, in particular an opening which might already exist between the hub and the root portion of the rotor blade.

In another embodiment, the cavity comprises the whole inside of the rotor blade such that only a minimum space is taken by spars and other supporting elements. Thus, the air can almost freely move and flow within the cavity of the rotor blade.

The air of the hub of the rotor blade may be sucked in from the nacelle of the rotor blade. In this case, air with an increased temperature may be taken away from the nacelle and be guided towards the rotor blades. This might have the beneficial effect of disposing waste heat which is present in the nacelle and which is for instance due to the generator that is located in the nacelle.

Apart of the disposal of the waste heat, the use of air with an increased temperature also has the advantage of deicing the rotor blades. Thus, a favorable combination and use of the heated air is proposed.

Finally, the invention is related towards a wind turbine comprising one or several of the described rotor blades. The use of such a rotor blade in a wind turbine has the advantage that due to the increase of the lift of the rotor blade the potential annual energy production of the wind turbine is increased compared to a wind turbine with conventional rotor blades.

Embodiments of the invention are now described, by way of example only, with reference to the accompanying drawings, of which:

Figure 1      shows a wind turbine;

Figure 2      shows a rotor blade for a wind turbine;

Figure 3      shows a perspective view of a part of a rotor blade;

Figure 4      shows a tip section of a rotor blade comprising an opening for emission of air;

Figure 5      shows a top view of the tip section of Figure 4;

Figure 6      shows a side view of the tip section of Figure 4;

Figure 7      shows a tip section of a rotor blade comprising a plurality of holes for emission of air;

Figure 8      shows a curved slit as an opening for the emission of air;

Figure 9      shows a perspective view of a pointed tip section comprising an opening for emission of air; and

Figure 10    shows the embodiment of Figure 9 in a cross-sectional view.

The illustration in the drawings is in schematic form. It is noted that in different figures, similar or identical elements may be provided with the same reference signs.

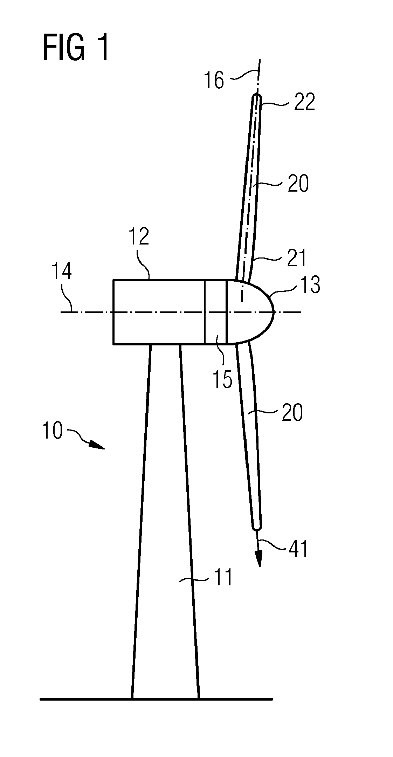

In Figure 1, a wind turbine 10 is shown. The wind turbine 10 comprises a nacelle 12 and a tower 11. The nacelle 12 is mounted at the top of the tower 11. The nacelle 12 is mounted rotatable with regard to the tower 11 by means of a yaw bearing. The axis of rotation of the nacelle 12 with regard to the tower 11 is referred to as the yaw axis.

The wind turbine 10 also comprises a hub 13 with three rotor blades 20 (of which two rotor blades 20 are depicted in Figure 1). Each rotor blade 20 comprises an opening at its tip section 22. Air may be emitted through the opening in a certain preferred direction 41.

The hub 13 is mounted rotatable with regard to the nacelle 12 by means of a main bearing. The hub 13 is mounted rotatable about a rotor axis of rotation 14.

The wind turbine 10 furthermore comprises a main shaft, which connects the hub 13 with a rotor of a generator 15. The hub 13 is connected directly to the rotor, thus the wind turbine 10 is referred to as a gearless, direct driven wind turbine. As an alternative, the hub 13 may also be connected to the rotor via a gearbox. This type of wind turbine is referred to as a geared wind turbine.

The generator 15 is accommodated within the nacelle 12. It comprises the rotor and a stator. The generator 15 is arranged and prepared for converting the rotational energy from the rotor into electrical energy.

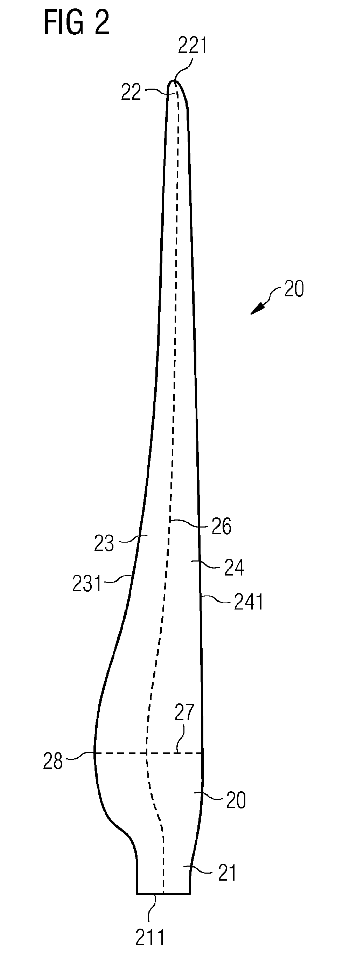

Figure 2 shows a rotor blade 20 of a wind turbine. The rotor blade 20 comprises a root section 21 with a root 211 and a tip section 22 with a tip 221. The root 211 and the tip 221 are virtually connected by the span 26 which follows the shape of the rotor blade 20. If the rotor blade were a rectangular shaped object, the span 26 would be a straight line. However, as the rotor blade 20 features a varying thickness, the span 26 is slightly curved or bent as well. Note that if the rotor blade 20 was bent itself, then the span 26 would be bent, too.

The rotor blade 20 furthermore comprises a leading edge section 24 with a leading edge 241 and a trailing edge section 23 with a trailing edge 231.

The trailing edge section 23 surrounds the trailing edge 231. Likewise, the leading edge section 24 surrounds the leading edge 241.

At each spanwise position, a chord line 27 which connects the leading edge 241 with the trailing edge 231 can be defined. Note that the chord line 27 is perpendicular to the span 26. The shoulder 28 is defined in the region where the chord line comprises a maximum chord length.

Furthermore, the rotor blade 20 can be divided into an inboard section which comprises the half of the rotor blade 20 adjacent to the root section 21 and an outboard section which comprises the half of the rotor blade 20 which is adjacent to the tip section 22.

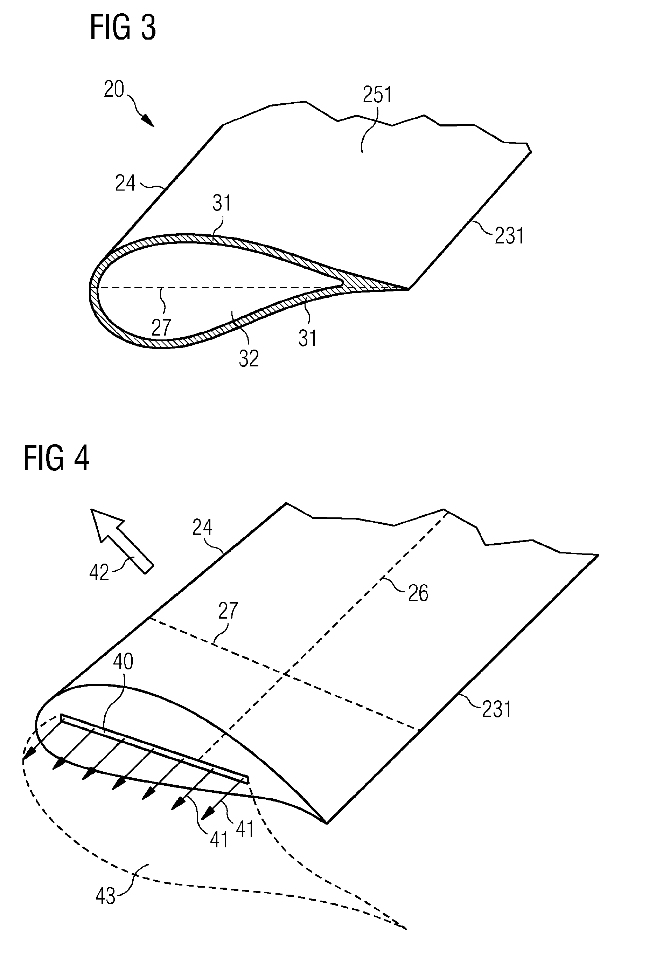

Figure 3 shows a cut of a rotor blade in the airfoil section of the rotor blade. The lift generating profile of the rotor blade can be well distinguished. The rotor blade 20 comprises a suction side 251 delimited by the leading edge section 24 and the trailing edge section. The leading edge 241 (which as such is not illustrated explicitly) and the trailing edge 231 are connected by the chord line 27. Figure 3 shows in schematic form the proportions and extensions of the shell 31 which encompasses the cavity 32 of the rotor blade. Note that the shell 31 is thickened in the trailing edge section which is, inter alia, due to manufacturing issues in the sharp trailing edge section.

Figure 4 shows the tip section 22 of a rotor blade. It can be seen that the tip section 22 comprises a pronounced airfoil profile in its cross sectional view. Furthermore, it can be seen that the tip section 22 comprises a planar shape perpendicular to the longitudinal axis 26. In other words, this tip section 22 is not a pointed tip section. The tip section 22 comprises an opening 40 which is suitable for emitting air from the cavity to the outside relative to the rotor blade. The opening 40 has the specific shape of a slit. The direction of the emitted air 41 is substantially parallel to the longitudinal axis 26 of the rotor blade. Note that due to the movement of the rotor blade in the ambient air (the direction of the movement of the rotor blade 42), the resulting emitted air 43 is not extending in an exclusively radial direction of the rotor blade. The radial direction of the rotor blade refers to the direction of the longitudinal axis 26 of the rotor blade. The emitted air 43 rather is deviated towards the trailing edge 231 due to the movement of the rotor blade in the ambient air.

Figure 4 illustrates that the opening 40 provides means for displacing a tip vortex away from the tip section 22 of the rotor blade. Without such an opening, tip vortices would be possible to flow from the suction side to the pressure side and vice versa. However, by the tip jets which are generated due to the opening, these tip vortices are pushed away, which has to be understood that they are displaced away from the region of the tip section. This potentially improves the local aerodynamic characteristics of the rotor blade, consequently leading to an increased lift and an increased annual energy production of the rotor blade, respectively the wind turbine.

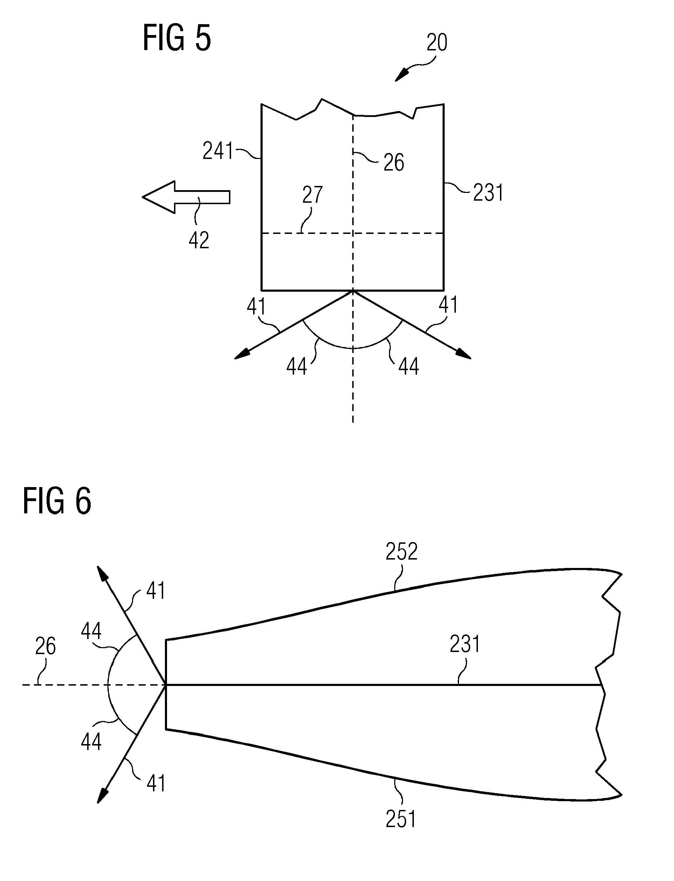

Figures 5 and 6 show two different perspectives and views of the tip section 22 of the rotor blade as shown in Figure 4. Figure 5 is a top view of the rotor blade 20. This means that it is looked at the rotor blade from upside, i.e. from the pressure side, or from the downside, i.e. from the suction side, of the rotor blade 20. The direction of the emitted air 41 is shown for two extreme cases. On the one hand, the emitted air 41 is deviated from the direction of the longitudinal axis 26 towards the leading edge 241 by an angle of air emission 44 of sixty degrees. On the other hand, the direction of the emitted air 41 is deviated towards the trailing edge 231 by sixty degrees relative to the longitudinal axis 26. This opens up an area of possible directions of air emission of 120 degrees in this exemplary embodiment of the invention.

Figure 6 illustrates a deviation of the emitted air relative to the longitudinal axis 26 outside the rotor plane, i.e in a direction of either the suction side 251 or the pressure side 252 of the rotor blade. In a three-dimensional view, this results in a cone of possible directions of the emitted air 41 relative to the longitudinal axis 26.

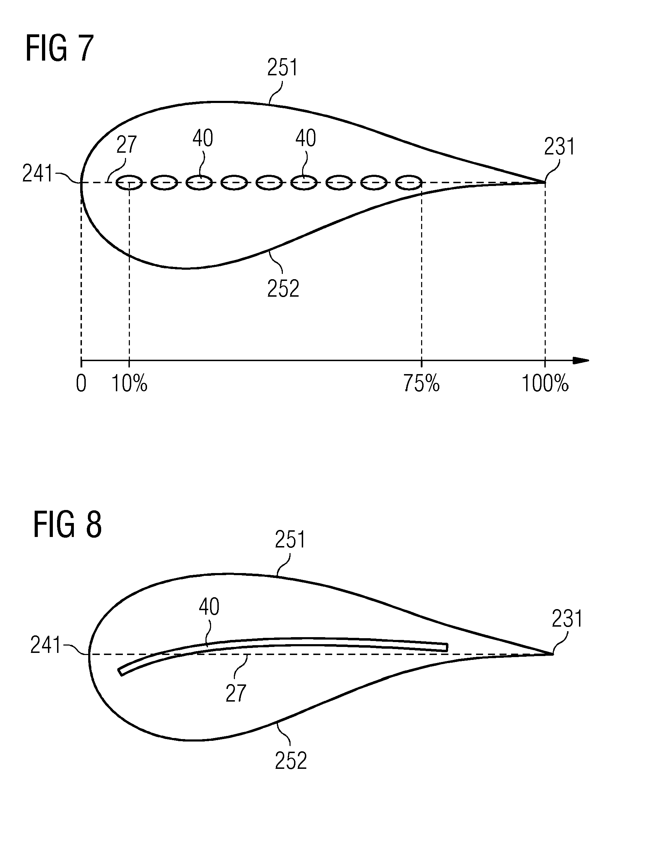

Figure 7 shows another embodiment of an opening 40 comprising a plurality of holes. The holes each have a substantially elliptical shape with a certain eccentricity being different of the value "one" (i.e. differing from a perfectly circular shape). Alternatively, the shape of the holes might also be substantially circular. The openings are aligned along the chord line 27 of the airfoil profile. The openings extend from five per cent chordwise position as measured from the leading edge 241 up to a chordwise position of eighty per cent, as measured from the leading edge section. It might be advantageous to extend the openings until a limit that is relatively close to the leading edge but further away from the trailing edge due to the fact that the thickness of the rotor blade is less at the trailing edge compared to the leading edge. This is due to the airfoil profile of the rotor blade.

Figure 8 shows another embodiment of a configuration of an opening 40. The opening 40 is shaped as a slit as in Figure 4. However, this embodiment comprises a curved or bent slit. This has the advantage that it adapts well to the specific shape of the airfoil profile. For instance, if the tip section has an airfoil profile which is strongly cambered, a curved slit as an opening for the emitted air might be advantageous.

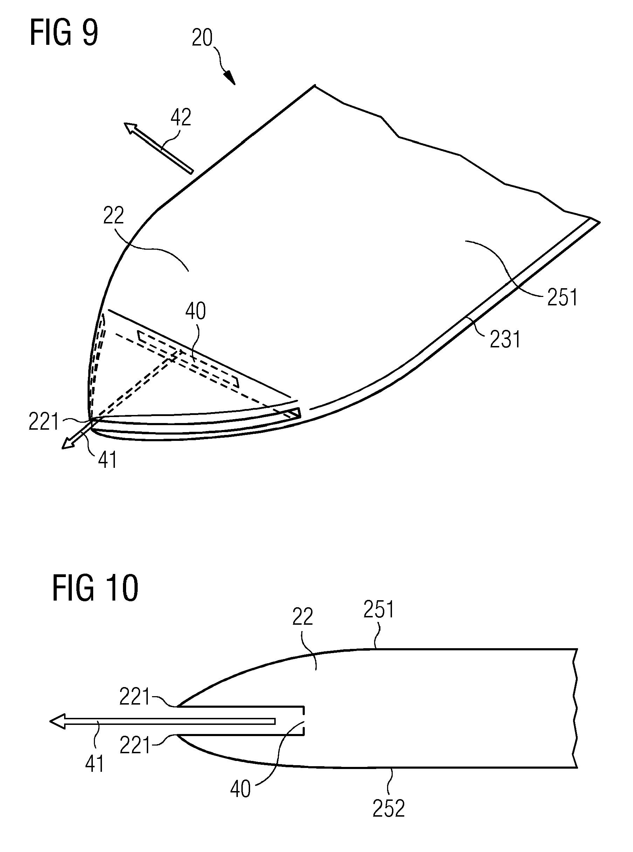

Figures 9 and 10 show a pointed tip section 22 of a rotor blade 20 with a grooved-in recess for accommodating the opening 40.

Figure 9 shows a perspective view of the tip section 22 of the rotor blade 20. The tip section 22 is illustrated in a view onto the suction side 251 of the rotor blade 20. The rotor blade 20 is designed for being moved through the air in the direction as referenced by reference sign 42. The perspective of Figure 9 is chosen such that the trailing edge 231 of the rotor blade 20 can be seen.

The tip section 22 of the rotor blade 20 is tapered towards the tip 221 of the rotor blade 20. In other words, the rotor blade 20 comprises a pointed tip section 22.

The tip section 22 comprises a recess, i.e. it comprises an area in the proximity of the tip 221 where a recess has been grooved into the rotor blade 20. This enables the provision of the opening 40 for emission of air to be arranged in a plane which is substantially perpendicular to the span of the rotor blade 20. The opening 40 is destined for emitting air from inside the rotor blade 20, i.e. from the cavity, into the outside. A first advantage of the embodiment as shown in Figure 9 is the facilitation of manufacturing of the opening 40. A second advantage is that the air, which exits the cavity at the opening 40, is firstly emitted into the recess until it reaches the tip 221 of the rotor blade 20 where it is subsequently emitted into the outside unrestrictedly. In other words, the emitted air is still restricted, i.e. bound, in a certain way until it reaches the tip 221 of the rotor blade. This ensures a more focused emission of air.

Figure 10 is a cross-sectional view of the embodiment as shown in Figure 9 in a plane which substantially comprises the span of the rotor blade 20. Note the restriction of the emitted air by the upper surface and the lower surface of the recess, until the emitted air reaches the tip 221 of the rotor blade.

**Claims**

1. Rotor blade (20) for a wind turbine (10), wherein

   - the rotor blade (20) comprises a shell (31) which defines the outer shape of the rotor blade (20),
   - the rotor blade (20) comprises a cavity (32) which is encompassed by the shell (31),
   - the rotor blade (20) comprises a longitudinal axis (26) which extends from the root section (21) of the rotor blade (20) to the tip section (22) of the rotor blade (20),
   **characterized in that**
   - the tip section (22) comprises an opening (40) for emitting air from the cavity (32) to the outside, and
   - the opening (40) is configured such that the emitted air (43) flows out in an angle (44) which deviates less than sixty degrees from the longitudinal axis (26) of the rotor blade (20), thus a tip vortex being generated at the tip section (22) of the rotor blade (20) is displaced from the tip section (22).

2. Rotor blade (20) according to claim 1, wherein the emitted air (43) flows out in an angle (44) which deviates less than forty degrees from the longitudinal axis (26) of the rotor blade (20).

3. Rotor blade (20) according to claim 1, wherein the emitted air (43) flows out in an angle (44) which is substantially parallel to the longitudinal axis (26) of the rotor blade (20).

4. Rotor blade (20) according to one of the preceding claims, wherein the opening (40) is shaped as a slit.

5. Rotor blade (20) according to claim 4, wherein the slit is oriented in a substantially chordwise direction of the tip section (22) of the rotor blade (20).

6. Rotor blade (20) according to one of the claims 4 or 5, wherein the slit is curved.

7. Rotor blade (20) according to one of the preceding claims, wherein the opening (40) comprises a plurality of holes, the holes having in particular elliptical shapes.

8. Rotor blade (20) according to one of the preceding claims, wherein the opening (40) extends at least partially

   - into the chordwise region between zero per cent and twenty per cent as measured from the leading edge (241) of the rotor blade (20), and/or
   - into the chordwise region between zero per cent and twenty per cent as measured from the trailing edge (231) of the rotor blade (20).

9. Rotor blade (20) according to one of the preceding claims, wherein the air is emitted at the opening (40) due to a difference in the pressure of the air in the cavity (32) during rotation of the rotor blade (20) about a rotor axis of rotation (14).

10. Rotor blade (20) according to one of the preceding claims, wherein the tip section (22) is pointed and comprises a recess for accommodating the opening (40) for emitting air from the cavity (32) to the outside.

11. Rotor blade (20) according to one of the preceding claims,

wherein the air is sucked in from the hub (13) of the wind turbine (10).

12. Rotor blade (20) according to claim 11, wherein

   - the air, which is sucked in from the hub (13) of the rotor blade (20), has a first temperature when entering the rotor blade (20) at the root section (21) and has a second temperature when exiting the rotor blade (20) at the tip section (22), and
   - the first temperature is higher than the second temperature.

13. Wind turbine (10) comprising a rotor blade (20) according to one of the preceding claims.

FIG 1

## FIG 2

FIG 3

FIG 4

## FIG 5

## FIG 6

FIG 7

FIG 8

FIG 9

20

42

22

40

251

231

221

41

FIG 10

22    251

221

221

41

40

252

Europäisches
Patentamt

European
Patent Office

Office européen
des brevets

## EUROPEAN SEARCH REPORT

Application Number

EP 14 19 8525

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 1 087 436 A (NEYRPIC ETS) 23 February 1955 (1955-02-23) * figure 1 * | 1-13 | INV. F03D11/02 |
| X | US 2012/025541 A1 (HIRAI SHIGETO [JP] ET AL) 2 February 2012 (2012-02-02) * figure 6 * | 1-13 | |
| X | DE 101 26 814 A1 (FALLER SEN ALEXANDER [DE]) 20 March 2003 (2003-03-20) * abstract; figure 1 * | 1-13 | |
| A | GB 682 627 A (JEAN EDOUARD ANDREAU) 12 November 1952 (1952-11-12) * figures 2,3 * | 1-13 | |
| A | US 2007/014657 A1 (PARERA JORGE [US]) 18 January 2007 (2007-01-18) * figure 2 * | 1-13 | |
| A | EP 1 780 408 A1 (GEN ELECTRIC [US]) 2 May 2007 (2007-05-02) * figure 2 * | 1-13 | TECHNICAL FIELDS SEARCHED (IPC) F03D |

The present search report has been drawn up for all claims

| Place of search | Date of completion of the search | Examiner |
|---|---|---|
| The Hague | 3 June 2015 | Bradley, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 034 871 A1**

## ANNEX TO THE EUROPEAN SEARCH REPORT
## ON EUROPEAN PATENT APPLICATION NO.

EP 14 19 8525

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2015

| Patent document cited in search report | | Publication date | Patent family member(s) | | Publication date |
|---|---|---|---|---|---|
| FR 1087436 | A | 23-02-1955 | NONE | | |
| US 2012025541 | A1 | 02-02-2012 | EP | 2589805 A1 | 08-05-2013 |
| | | | JP | 5463218 B2 | 09-04-2014 |
| | | | JP | 2012013003 A | 19-01-2012 |
| | | | US | 2012025541 A1 | 02-02-2012 |
| | | | WO | 2012002466 A1 | 05-01-2012 |
| DE 10126814 | A1 | 20-03-2003 | NONE | | |
| GB 682627 | A | 12-11-1952 | NONE | | |
| US 2007014657 | A1 | 18-01-2007 | NONE | | |
| EP 1780408 | A1 | 02-05-2007 | BR | PI0604707 A | 28-08-2007 |
| | | | CN | 1955459 A | 02-05-2007 |
| | | | EP | 1780408 A1 | 02-05-2007 |
| | | | US | 2007098552 A1 | 03-05-2007 |

EPO FORM P0459

For more details about this annex : see Official Journal of the European Patent Office, No. 12/82